# EUROPÄISCHE PATENTSCHRIFT

(11) **EP 1 064 187 B1**
(45) Veröffentlichungstag und Bekanntmachung des Hinweises auf die Patenterteilung: **05.03.2003**
(21) Anmeldenummer: 00908921.0
(22) Anmeldetag: 14.01.2000
(51) Int. Cl.: B62D 7/16

(54) **KORROSIONSGESCHÜTZTE BAUEINHEIT UND VERFAHREN ZUR HERSTELLUNG EINER SOLCHEN BAUEINHEIT**
CORROSION-PROTECTED AGGREGATE AND METHOD FOR PRODUCING SUCH A COMPONENT
MODULE PROTEGE CONTRE LA CORROSION ET PROCEDE DE FABRICATION D'UN TEL MODULE

(30) Priorität: 21.01.1999 DE 19902361
(43) Veröffentlichungstag der Anmeldung: 03.01.2001
(73) Patentinhaber: ZF Lemförder Metallwaren AG, 49441 Lemförde (DE)
(72) Erfinder: HEIDEMANN, Manfred, D-49191 Belm-Vehrte (DE); VON GARREL, Jürgen, D-49401 Damme (DE)
(86) Internationale Anmeldenummer: DE0000124
(87) Internationale Veröffentlichungsnummer: WO00043252

(56) Entgegenhaltungen:
- US-A- 5 092 704
- US-A- 5 312 200

## Beschreibung

Die Erfindung betrifft eine korrosionsgeschützte Baueinheit zweier Bauteile nach dem Oberbegriff des Patentanspruches 1 sowie ein Verfahren zur Herstellung einer solchen korrosionsgeschützten Baueinheit.

Metallische Bauteile müssen nicht nur wachsenden Anforderungen an eine höhere Belastbarkeit sondern auch an eine längere Lebensdauer gerecht werden. Hierzu sind insbesondere Korrosionsschutzmaßnahmen von entscheidender Bedeutung. Nachteilig ist jedoch, daß mit steigendem Aufwand für den Korrosionsschutz auch die Herstellungskosten wachsen. Um diesen Nachteil in sinnfälliger Weise zu beheben, ist es beispielsweise aus dem modernen Automobilbau bekannt, metallische Rohteile mit einem Überzug, wie einer korrosionsschutzfähigen Lackschicht zu versehen, bevor sie einer weiteren Bearbeitung zugeführt werden. Durch die Aufbringung einer derartigen Lackschicht ergeben sich allerdings Nachteile hinsichtlich der Bauteiltoleranzen. So muß die Lackschicht an Kontaktpaarungsstellen und aus Bohrungen in zum Teil aufwendigen Arbeitsgängen nachträglich wieder entfernt werden, bevor eine Verbindung mit anderen Bauteilen erfolgen kann. Durch die mechanische Nachbearbeitung der metallischen Bauteile wird die Lackschicht parziell entfernt, woraus sich wiederum eine Angriffsfläche für korrosive Medien ergibt.
Eine weitere Möglichkeit, um zu verhindern, daß der Oberflächenschutz das gesamte Bauteil vollständig bedeckt, besteht darin, die mit Oberflächenschutz zu bearbeitenden Bauteilpartien vorab mechanisch zu bearbeiten, dann abzudecken, zu versiegeln oder abzukleben, um letztlich den Oberflächenschutz aufbringen zu können. Die Abdeckung wird dabei zumeist wieder entfernt und ist nicht wieder nutzbar. Diese bekannte Methode ist jedoch sehr aufwendig und damit kostenintensiv.

Eine Einrichtung nach dem Oberbegriff des Anspruchs 1 ist aus US 5 312 200 bekannt.

Der Erfindung liegt die technische Problemstellung zugrunde, eine Baueinheit zweier Bauteile zu schaffen die mit einfachen kostengünstigen Mitteln einen optimalen Korrosionsschutz ermöglicht. Zudem soll ein Verfahren zur Herstellung einer korrosionsgeschützten Baueinheit bereitgestellt werden.

Die Erfindung löst diese technische Problemstellung mit den kennzeichnenden Merkmalen des Patentanspruches 1 und den Verfahrensschritten des Patentanspruches 10. Ausgestaltungen der Erfindung sind Gegenstand der Unteransprüche.

Ein erstes metallisches Bauteil weist erfindungsgemäß eine Aufnahmeöffnung auf, in die ein zweites Bauteil zumindest parziell einsetzbar ist. Das zweite Bauteil ist zur Abdichtung der relativ zueinander beweglichen Bauteile mit einem Dichtelement ausgestattet. Eine an dem Dichtelement angeformte Anlagefläche wirkt mit der Oberfläche des ersten Bauteiles zusammen. Bei dem ersten Bauteil handelt es sich erfindungsgemäß um ein metallisches Rohteil, das aus Korrosionsschutzgründen einfach und kostengünstig mit einer Lackschicht überzogen wird oder in einer anderen, an sich bekannten Weise mit einem Oberflächenschutz versehen ist. Der Notwendigkeit der Einhaltung exakter Maßtoleranzen wurde dadurch entsprochen, daß an dem ersten Bauteil eine mechanische Entfernung der Lackschicht bzw. der oberflächenbehandelten Bereiche erfolgt. An diesem mechanisch bearbeiteten Bereich ist nachfolgend eine Kontaktpaarung mit einem zweiten Bauteil möglich. Das zweite Bauteil kann seinerseits aus mehreren Einzelteilen zusammengesetzt sein. Diese sollten, sofern sie relativ zu einander beweglich sind, durch ein Dichtelement vor dem Eindringen korrosiver Medien zwischen die sich bewegenden Teile geschützt sein. Erfindungsgemäß wird vorgeschlagen, zwischen der Anlagefläche des Dichtelementes und der Oberfläche des ersten Bauteiles ein Korrosionsschutzelement festhaftend auf die Oberfläche des ersten Bauteiles aufzubringen.

Als Korrosionsschutzelement kann dabei eine aufgeklebte Dichtung, Scheibe oder Folie dienen. Natürlich muß die Oberfläche des ersten Bauteiles vor der Verbindung mit dem Korrosionsschutzelement von Staub, Fett und anderen Verunreinigungen befreit werden. Je nach Einsatzgebiet der Bauteile können die Korrosionsschutzelemente aus unterschiedlichen Werkstoffen hergestellt werden. Als besonders vorteilhaft hat sich die Verwendung von Polyvinylclorid (PVC) erwiesen. Dieser Werkstoff ist sowohl wasser- als auch hitze-, kälteund öl- bzw. fettbeständig. Er weist eine vorteilhafte Materialflexibilität über einen weiten Einsatzbereich hinweg auf und eignet sich zudem in hervoragender Weise zum verkleben. PVC ist darüber hinaus als selbstklebende Folie erhältlich.
Da der mechanische Abtrag des oberflächenbehandelten Bereiches des ersten Bauteiles zumeist relativ großzügig ausgeführt wird und da das Korrosionsschutzelement den oberflächenbehandelten Bereich vollständig überdecken sollte, ergibt sich, daß die Anlagefläche des Dichtelementes eine kleinere geometrische Aussenabmessung aufweist, als das Aussenmaß des Korrosionsschutzelementes. Dies bedeutet jedoch einen gewissen Überstand des Korrosionsschutzelementes über die Anlagefläche des Dichtelementes. Infolge der Werkstoffpaarung von Dichtelement und Korrosionsschutzelement ergibt sich eine Gleitfläche, die eine zusätzliche Dichtwirkung ermöglicht. Hier wäre sogar eine komplementäre Profilierung denkbar, sodaß eine Art Labyrinthdichtung geschaffen wird.

Ein spezieller erfindungsgemäßer Anwendungsfall soll nachstehend anhand einer Radträgerbaueinheit eines Kraftfahrzeuges erläutert werden. Das erste Bauteil ist der Radträger des Kraftfahrzeuges und das zweite Bauteil der Kugelzapfen eines Kugelgelenkes. Das Kugelgelenk besteht seinerseits aus einem Gehäuse und einer in dem Gehäuse aufgenommenen Lagerschale in welcher die Gelenkkugel eines allseitig beweglich gelagerten Kugelzapfens eingesetzt ist. Ferner weist ein derartiges Kugelgelenk einen Dichtungsbalg als Dichtelement auf, der einerseits am Gehäuse und andererseits an dem Kugelzapfen dichtend anliegt und somit die relativ zu einander beweglichen Bauteile gegenüber Umwelteinflüssen abdichtet Auf der dem Radträger zugewandten Seite verfügt der Dichtungsbalg über eine Anlagefläche, die mit der Oberfläche des Radträgers zusammenwirkt. Der Radträger wird in der zuvor beschriebenen Weise als Rohteil mit einem Oberflächenschutz versehen, welcher beispielsweise aus einem Lacküberzug bestehen kann. Da der konische Zapfenbereich des Kugelzapfens des Kugelgelenkes paßgenau in der dafür vorgesehenen Aufnahme des Radträgers eingesetzt werden muß, ist es erforderlich, die ungewollt in die Aufnahme eingedrungenen Fremdstoffe vor der Montage des Kugelzapfens zu entfernen. Darüber hinaus ist es notwendig, um eine optimale Abdichtung des Gesamtsystemes zu erreichen, die Anlagefläche des Dichtungsbalges an dem Radträger mechanisch zu bearbeiten. Die Oberfläche des Radträgers muß plan sein, um eine bestmögliche Dichtwirkung zu erzielen. Erfindungsgemäß wird auf diese mechanisch vorbearbeitete Oberfläche des Radträgers ein Korrosionsschutzelement aufgeklebt, dessen Aussendurchmesser größer ist als die Anlagefläche des Dichtungsbalges. Um eine maßgenaue Fixierung des Korrosionsschutzelementes zu ermöglichen, wird zunächst ein Montagedorn in die Aufnahmeöffnung eingesetzt und anschließend das Korrosionsschutzelement auf den Oberflächenbereich des Radträgers unter gleichzeitiger Positionierung des Korrosionsschutzelementes aufgeklebt. Nachdem der Montagestift entfernt wurde kann der Kugelzapfen des Kugelgelenkes in die dafür vorbereitete Aufnahme eingesetzt und in an sich bekannter Weise, beispielsweise durch eine Schraubverbindung, an dem Radträger fixiert werden. Während der Befestigung des Kugelzapfens am Radträger erfährt der Dichtungsbalg eine geringfügige elastische Verformung in axialer Richtung, so das er unter elastischer Vorspannung mit der Oberfläche des Radträgers zusammenwirkt. Somit wird eine optimale Dichtwirkung erreicht.

Mit einer erfindungsgemäßen korrosionsgeschützten Baueinheit und dem hierzu entwickelten Verfahren wird eine optimale Korrosionsbeständigkeit zweier gegeneinander abzudichtender Bauteile erreicht. Die Korrosionsunterwanderung des Dichtelementes wird vollständig verhindert. In Folge der mechanischen Bearbeitung der Oberflächen können Oberflächenrauhigkeiten vermieden werden, die ansonsten einer Korrosionsunterwanderung förderlich wären. Insgesamt wird dadurch eine Erhöhung der Lebensdauer metallischer Bauteile erreicht. Zudem wurde eine kostengünstige Variante gefunden, die auch eine Integration in bereits laufende Serienprodukte ermöglicht.

Eine bevorzugte Ausführungsvariante einer erfindungsgemäßen korrosionsgeschützten Baueinheit soll nachstehend anhand der Zeichnung näher erläutert werden.

Es zeigen:

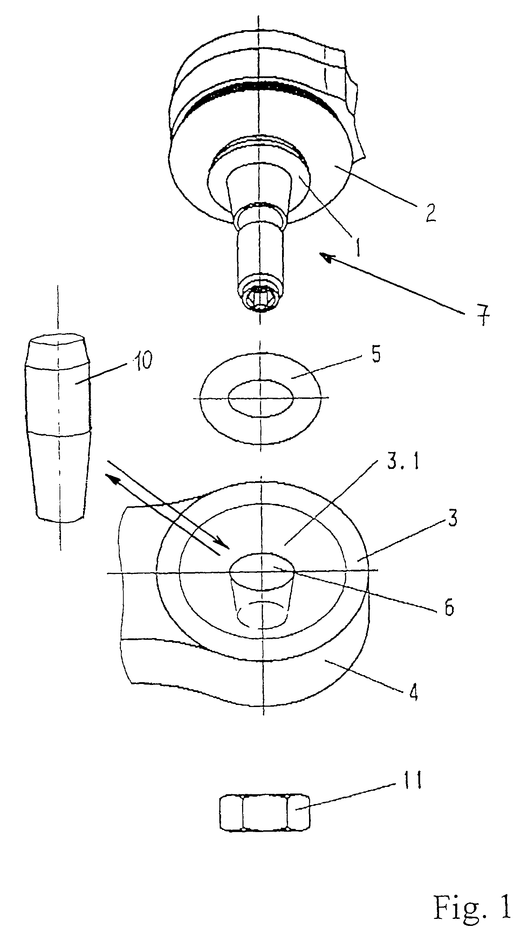

**Figur 1:** eine Explosivdarstellung einer Gelenkanbindung in einem Kraftfahrzeug und

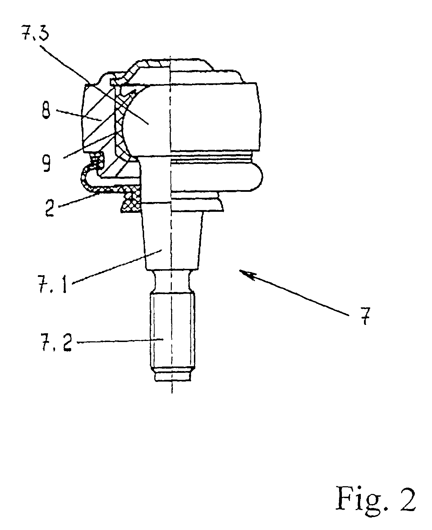

**Figur 2:** ein Kugelgelenk im Teilschnitt.

In den Figuren ist beispielhaft für eine korrosionsgeschützte Baueinheit zweier Bauteile die Gelenkanbindung in Gestalt eines Radträgers 4 dargestellt, wie er in Kraftfahrzeugen zum Einsatz kommt. Der Radträger 4 weist dabei eine Aufnahmeöffnung 6 auf, die eine komplementäre Geometrie zu dem in die Aufnahmeöffnung 6 einzusetzenden Kugelzapfen 7 aufweist. Der Kugelzapfen besteht seinerseits aus einem konischen Bereich 7.1 und einem endseitig an dem konischen Bereich befindlichen Gewindebereich 7.2. Die Gelenkkugel 7.3 des Kugelzapfens 7 ist in einer Lagerschale 9 allseitig beweglich aufgenommen. Die Lagerschale ist ihrerseits in einem Gehäuse 8 des Kugelgelenkes eingesetzt. Zur Abdichtung der relativ zueinander beweglichen Kugelgelenkbauteile dient ein Dichtelement 2, das vorliegend ein Dichtungsbalg ist. Dieser Dichtungsbalg 2 weist an der dem Radträger 4 zugewandten Seite eine Anlagefläche 1 auf. Diese Anlagefläche 1 des Dichtungsbalges 2 kommt an dem von Oberflächenschutz befreiten Oberflächenbereich 3.1 der Oberfläche 3 des Radträgers 4 zur Anlage Um den Oberflächenbereich 3.1 optimal gegen korrosive Einflüsse zu schützen, ist erfindungsgemäß ein Korrosionsschutzelement 5 auf diesen Oberflächenbereich 3.1 aufgeklebt. Der Kugelzapfen durchdringt mit seinem konischen Bereich 7.1 sowohl die Öffnung des Dichtungsbalges 2, als auch des Korrosionsschutzelementes 5 und die Aufnahmeöffnung 6 im Radträger 4. Der unterhalb des Radträgers 4 austretende Gewindebereich 7.2 des Kugelzapfens 7 wird von der Unterseite des Radträgers her durch eine Sechskantmutter 11 arretiert.

Um eine dargestellte erfindungsgemäße Baueinheit zu schaffen, sind die nachfolgend aufgezählten Verfahrensschritte erforderlich:
zunächst wird der Radträger 4 als Rohteil mit einer Oberflächenschutzschicht versehen. Anschließend erfolgt eine mechanische Bearbeitung des Oberflächenbereiches 3.1 der Oberfläche 3 sowie erforderlichenfalls der Aufnahmeöffnung 6. Im Rahmen dieser mechanischen Bearbeitung werden Verunreinigungen jeglicher Art entfernt, wobei sich ein geringfügiger Materialabtrag erforderlich macht. In die Aufnahmeöffnung 6 des Radträgers 4 wird nun ein Montagestift 10 eingesetzt. Dieser Montagestift 10 unterstützt die Positionierung des Korrosionsschutzelementes 5 welches auf den Oberflächenbereich 3.1 der Oberfläche 3 des Radträgers 4 geklebt wird. Nach der Aufbringung des Korrosionsschutzelementes 5 auf der genannten Oberfläche wird der Montagestift 10 entfernt. Im Anschluß daran erfolgt die Montage des Kugelgelenkes, in dem der konische Bereich 7.1 des Kugelzapfens 7 durch die Aufnahmeöffnung 6 des Radträgers hindurchgeführt und von der Unterseite des Radträgers 4 her mittels der Sechskantmutter 11 festgesetzt wird. Der Dichtungsbalg 2 erfährt während des Festlegens des Kugelzapfens 7 eine geringfügige axiale Verformung, sodaß er elastisch gegen das Korrosionsschutzelement 5 und damit den Oberflächenbereich 3.1 des Radträgers drückt Das aus PVC hergestellte Korrosionsschutzelement 5 und die Anlagefläche 1 des Dichtungsbalges 2 bilden dabei eine dichtende Gleitfläche. Das Korrosionsschutzelement 5 kann beispielsweise aus einer 0,05 mm bis 0,08 mm starken Folie, die einseitig oder beidseitig mit einem Klebstoff versehen ist, bestehen.
Als Klebstoff können Lösungsmittelacryllatklebstoffe mit hoher Anfangshaftung und Endhaftung, beispielsweise ein Selbstkleber auf der Basis von Acrylsäuremethylester verwendet werden.
Der Vorteil von PVC (Weiß, Transparent oder Matt) besteht in der Festigkeit und Beständigkeit gegen eine Vielzahl von mineralischen Ölen, Fetten, Kraftstoffen, schwachen Säuren und aliphatischen Lösungsmitteln, so das dieser Werkstoff hervorragend für den Kraftfahrzeugbau geeignet ist. Er ist beständig gegen jegliche Witterungseinflüsse, Feuchtigkeit, Licht und ist darüber hinaus formstabil über einen langen Lebensdauerzyklus hinweg.

Zur Reinigung des Oberflächenbereiches 3.1 des Radträgers 4 kommen beispielsweise fettfreie Lösungsmittel wie Heptan, Isopropylalkohol oder Spiritus zum Einsatz.

### Bezugszeichenliste:

- 1: Anlagefläche
- 2: Dichtelement (Dichtungsbalg)
- 3: Oberfläche
- 3.1: Oberflächenbereich
- 4: erstes Bauteil (Radträger)
- 5: Korrosionsschutzelement
- 6: Aufnahmeöffnung
- 7: Kugelzapfen
- 7.1: konischer Bereich
- 7.2: Gewindebereich
- 7.3: Gelenkkugel
- 8: Gehäuse
- 9: Lagerschale
- 10: Montagestift
- 11: Sechskantmutter

## Patentansprüche

1. Korrosionsgeschützte Baueinheit zweier Bauteile, von denen ein erstes metallisches Bauteil eine Aufnahmeöffnung (6) aufweist, in die ein zweites Bauteil zumindest partiell einsetzbar und das zweite Bauteil mit einem Dichtelement (2) ausgestattet ist, das über eine Anlagefläche (1) mit der Oberfläche des ersten Bauteiles zusammenwirkt,
**dadurch gekennzeichnet, daß**
zwischen der Anlagefläche (1) des Dichtelementes (2) und der Oberfläche (3) des ersten Bauteiles (4) ein festhaftendes Korrosionsschutzelement (5) in Form einer auf die Oberfläche (3) des ersten Bauteiles (4) aufgeklebten Dichtung, Scheibe oder Folie angeordnet ist.

2. Korrosionsgeschützte Baueinheit nach Anspruch 1,
**dadurch gekennzeichnet, daß**
das Korrosionsschutzelement (5) eine Materialstärke von 0,05 bis 0,08 mm und die wenigstens einseitig auf das Korrosionsschutzelement (5) aufgebrachte Klebstoffschicht eine Dicke von 0,01 bis 0,03 mm aufweist.

3. Korrosionsgeschützte Baueinheit nach Anspruch 2,
**dadurch gekennzeichnet, daß**
das Korrosionsschutzelement (5) aus Kunststoff, wie PVC besteht.

4. Korrosionsgeschützte Baueinheit nach einem der vorstehenden Ansprüche,
**dadurch gekennzeichnet, daß**
das geometrische Außenmaß der Anlagefläche (1) des Dichtelementes (2) kleiner als das Außenmaß des Korrosionsschutzelementes (5) ist.

5. Korrosionsgeschützte Baueinheit nach einem der vorstehenden Ansprüche,
**dadurch gekennzeichnet, daß**
die Aufnahmeöffnung (6) in dem ersten Bauteil (4) eine zu dem zweiten Bauteil (7) komplementäre Geometrie aufweist.

6. Korrosionsgeschützte Baueinheit nach einem der vorstehenden Ansprüche,
**dadurch gekennzeichnet, daß**
das erste Bauteil (4) ein Radträger eines Kraftfahrzeuges und das zweite Bauteil (7) der Kugelzapfen eines Kugelgelenkes ist.

7. Korrosionsgeschützte Baueinheit nach Anspruch 6,
**dadurch gekennzeichnet, daß**
das Kugelgelenk aus einem Gehäuse (8), einer in dem Gehäuse aufgenommenen Lagerschale (9), in der die Gelenkkugel (7.3) des allseitig beweglich gelagerten Kugelzapfens (7) eingesetzt ist und aus einem Dichtungsbalg (2) als Dichtelement besteht, wobei der Dichtungsbalg einerseits am Gehäuse und andererseits an dem Kugelzapfen dichtend anliegt.

8. Korrosionsgeschützte Baueinheit nach Anspruch 7,
**dadurch gekennzeichnet, daß**
der Kugelzapfen (7) einen in die Aufnahmeöffnung (6) einsetzbaren, zumindest bereichsweise konischen Zapfenhals (7.1) und daran einen endseitigen Gewindebereich (7.2) aufweist, wobei der Zapfenhals (7.1) den Radträger (4) vollständig durchsetzt und mittels einer Sechskantmutter (11) an dem Radträger (4) festgesetzt ist.

9. Korrosionsgeschützte Baueinheit nach Anspruch 8,
**dadurch gekennzeichnet, daß**
der Dichtungsbalg (2) nach der Montage des Kugelgelenkes eine geringfügige axiale Verformung aufweist, sodaß er unter elastischer Vorspannung mittelbar gegen die Oberfläche des Radträgers (4) wirkt.

10. Verfahren zur Herstellung einer korrosionsgeschützten Baueinheit nach einem der vorangehenden Ansprüche,
**gekennzeichnet durch folgende Verfahrensschritte:**
- Aufbringung einer Oberflächenschutzschicht auf dem ersten metallischen Bauteil (4),
- mechanische Bearbeitung eines Oberflächenbereiches (3.1) der Oberfläche (3) des ersten Bauteiles (4),
- einsetzen eines Montagestiftes (10) in die Aufnahmeöffnung (6) des ersten Bauteiles (4),
- aufkleben des Korrosionsschutzelementes (5) auf den vorbereiteten Oberflächenbereich (3.1) des ersten Bauteiles (4) unter gleichzeitiger Positionierung des Korrosionsschutzelementes (5),
- entfernen des Montagestiftes (10),
- einsetzen des zweiten Bauteiles (7) in die Aufnahmeöffnung (6) und dessen nachfolgende Fixierung an dem ersten Bauteil (4).

## Claims

1. Corrosion-proof constructional unit of two components, of which a first metal component has a location opening (6), into which a second component is at least partially insertable, and the second component is equipped with a sealing element (2), which via a locating face (1) cooperates with the surface of the of the first component,
**characterized in that**
disposed between the locating face (1) of the sealing element (2) and the surface (3) of the first component (4) is an adhesive anti-corrosion element (5) in the form of a seal, washer or foil glued onto the surface (3) of the first component (4).

2. Corrosion-proof constructional unit according to claim 1,
**characterized in that**
the anti-corrosion element (5) has a material thickness of 0.05 to 0.08 mm and the adhesive layer applied onto at least one side of the anti-corrosion element (5) has a thickness of 0.01 to 0.03 mm.

3. Corrosion-proof constructional unit according to claim 2,
**characterized in that**
the anti-corrosion element (5) is made of plastics material, such as PVC.

4. Corrosion-proof constructional unit according to one of the preceding claims,
**characterized in that**
the geometric external dimension of the locating face (1) of the sealing element (2) is smaller than the external dimension of the anti-corrosion element (5).

5. Corrosion-proof constructional unit according to one of the preceding claims,
**characterized in that**
the location opening (6) in the first component (4) has a complementary geometry to the second component (7).

6. Corrosion-proof constructional unit according to one of the preceding claims,
**characterized in that**
the first component (4) is a wheel carrier of a motor vehicle and the second component (7) is the ball pivot of a ball joint.

7. Corrosion-proof constructional unit according to claim 6,
**characterized in that**
the ball joint comprises a housing (8), a bearing shell (9), which is accommodated in the housing and in which the joint ball (7.3) of the float-mounted ball pivot (7) is inserted, and sealing bellows (2) as a sealing element, wherein the sealing bellows lie sealingly against the housing, on the one hand, and the ball pivot, on the other hand.

8. Corrosion-proof constructional unit according to claim 7,
**characterized in that**
the ball pivot (7) comprises an at least in sections conical pivot neck (7.1), which is insertable into the location opening (6), and a threaded region (7.2) situated on the end of said pivot neck, wherein the pivot neck (7.1) fully penetrates the wheel carrier (4) and is fastened to the wheel carrier (4) by means of a hexagon nut (11).

9. Corrosion-proof constructional unit according to claim 8,
**characterized in that**
after assembly of the ball joint the sealing bellows (2) present a slight axial deformation so that they act under elastic bias indirectly against the surface of the wheel carrier (4).

10. Method of manufacturing a corrosion-proof constructional unit according to one of the preceding claims,
**characterized by the following process steps:**
- applying a surface protection layer on the first metal component (4),
- machining a surface region (3.1) of the surface (3) of the first component (4),
- inserting an assembly pin (10) into the location opening (6) of the first component (4),
- gluing the anti-corrosion element (5) onto the prepared surface region (3.1) of the first component (4) with simultaneous positioning of the anti-corrosion element (5),
- removing the assembly pin (10),
- inserting the second component (7) into the location opening (6) and then fastening the second component (7) to the first component (4).

## Revendications

1. Module protégé contre la corrosion constitué de deux composants, dont un premier composant métallique comporte une ouverture de logement (6) dans laquelle un deuxième composant peut être inséré au moins partiellement et le deuxième composant est muni d'un élément d'étanchéité (2), qui interagit avec la surface du premier composant par l'intermédiaire d'une surface d'appui (1), **caractérisé en ce qu'**entre la surface d'appui (1) de l'élément d'étanchéité (2) et la surface (3) du premier composant (4) est disposé un élément de protection contre la corrosion (5) adhésif sous la forme d'un joint d'étanchéité, d'une rondelle ou d'un film collé sur la surface (3) du premier composant (4).

2. Module protégé contre la corrosion selon la revendication 1, **caractérisé en ce que** l'élément de protection contre la corrosion (5) a une épaisseur de 0,05 à 0,08 mm et la couche de colle sur au moins un côté de l'élément de protection contre la corrosion (5) a une épaisseur de 0,01 à 0,03 mm.

3. Module protégé contre la corrosion selon la revendication 2, **caractérisé en ce que** l'élément de protection contre la corrosion (5) est constitué de matière plastique, comme le PVC.

4. Module protégé contre la corrosion selon une des revendications précédentes, **caractérisé en ce que** la dimension extérieure de la surface d'appui (1) de l'élément d'étanchéité (2) est inférieure à la dimension extérieure de l'élément de protection contre la corrosion (5).

5. Module protégé contre la corrosion selon une des revendications précédentes, **caractérisé en ce que** l'ouverture de logement (6) ménagée dans le premier composant (4) présente une géométrie complémentaire par rapport au deuxième composant (7).

6. Module protégé contre la corrosion selon une des revendications précédentes, **caractérisé en ce que** le premier composant (4) est un support de roue d'un véhicule à moteur et le deuxième composant (7) est le pivot à rotule d'un joint à rotule.

7. Module protégé contre la corrosion selon la revendication 6, **caractérisé en ce que** le joint à rotule est constitué d'un boîtier (8), d'une coquille de coussinet (9) logée dans le boîtier, dans laquelle la rotule du joint (7.3) du pivot à rotule (7), logé de manière mobile dans toutes les directions, est insérée et d'un soufflet d'étanchéité (2) comme élément d'étanchéité, le soufflet d'étanchéité étant appuyé d'un côté sur le boîtier et de l'autre côté sur le pivot à rotule de manière étanche.

8. Module protégé contre la corrosion selon la revendication 7, **caractérisé en ce que** le pivot à rotule (7) comporte un collet de pivot (7.1) au moins partiellement conique pouvant être inséré dans l'ouverture de logement (6) et une partie filetée (7.2) à l'extrémité, le collet de pivot (7.1) traversant complètement le support de roue (4) et est fixé sur le support de roue (4) à l'aide d'un écrou à six pans (11).

9. Module protégé contre la corrosion selon la revendication 8, **caractérisé en ce que** le soufflet d'étanchéité (2) présente une légère déformation axiale après le montage du joint à rotule, de telle sorte qu'il s'appuie indirectement contre la surface du support de roue (4) sous contrainte élastique.

10. Procédé de fabrication d'un module protégé contre la corrosion selon une des revendications précédentes, **caractérisé par** les étapes de procédé suivantes :
- application d'une couche de protection de surface sur le premier composant métallique (4),
- traitement mécanique d'une partie (3.1) de la surface (3) du premier composant (4),
- mise en place d'une broche de montage (10) dans l'ouverture de logement (6) du premier composant (4)
- collage de l'élément de protection contre la corrosion (5) sur la partie de surface (3.1) préparée du premier composant (4) en positionnant en même temps l'élément de protection contre la corrosion (5),
- enlèvement de la broche de montage (10),
- insertion du deuxième composant (7) dans l'ouverture de logement (6) et fixation de celui-ci sur le premier composant (4).
